# EUROPEAN PATENT SPECIFICATION

(11) **EP 3 280 246 B1**
(45) Date of publication and mention of the grant of the patent: **04.09.2019**
(21) Application number: 15714521.0
(22) Date of filing: 09.04.2015
(51) Int. Cl.: A01G 3/02

(54) **SHEARS COMPRISING A FIRST AND A SECOND SHEAR PART**
SCHERE MIT EINEM ERSTEN UND EINEM ZWEITEN SCHERENTEIL
CISAILLES COMPRENANT UNE PREMIÈRE ET UNE SECONDE PARTIE DE CISAILLE

(43) Date of publication of application: 14.02.2018
(60) Divisional application: 19166807.8
(73) Proprietor: HUSQVARNA AB, 561 82 Huskvarna (SE)
(72) Inventor: ARNDT, Wolfgang, 89079 Ulm (DE); WANNENWETSCH, Christian, 89182 Bernstadt (DE); REH, Bernhard, 89150 Laichingen (DE)
(74) Representative: Finkele, Rolf
(86) International application number: PCT/EP2015/057756
(87) International publication number: WO 2016/162068

(56) References cited:
- DE-A1- 3 426 577
- GB-A- 1 089 225
- GB-A- 1 443 401
- GB-A- 1 450 368

## Description

The invention relates to the field of shears, in particular pruning shears or secateurs.

For cutting purposes, shears usually comprise a first shear part and a second shear part, both shear parts having a cutting blade and a shaft or lever arm which are arranged at opposite sides of a pivot. The pivot connects both first and shear parts with each other in rotatable manner.

Specific shears like pruning shears or secateurs comprise a spring element for providing an opening force to the first and second shear parts in order to bring the shears in an open position for a start of a following cutting movement. From DE 34 26 577 A1 a type of secateurs is known, having a flat spring element which acts upon the first and second shear parts to move the secateurs on to an open position. The flat spring element is fixedly arranged with a first end portion thereof at the first shear part by clamping it between an arrangement of two pins which are positioned laterally offset to one another and an inner surface of a handle. The second end portion of the flat spring is flexible and acts on the second shear part applying a spring force for opening the secateurs.

Both the flat spring element and the second shear part of the secateurs according to DE 34 26 577 A1 are made of metal. During cutting and opening operations there is a sliding movement between these components what after a number of operations causes noise or an erosion of the spring element surface due to abrasion.

Other examples of shears are provided in the documents GB 1 443 401 A, GB 1 089 225 A and GB 1 450 368 A.

It is therefore an object of the present invention to overcome this disadvantage and to provide a movement of a laminated or flat spring element on a contacting surface at the second shear part without or with only very low friction, thus avoiding occurrence of noise or abrasion.

The disadvantage of the solution known from the prior art is overcome with providing a shears, in particular pruning shears or secateurs, according to the technical features of claim 1.

The shears according to the present invention comprise a first shear part and a second shear part, each of the first and second shear parts having a cutting blade and a shaft or lever arm which are arranged at opposite sides of a pivot. The pivot rotatably connects the first and second shear parts with each other, allowing the shears to be moved from an open to a closed position and back to the open position. The shears further comprise a laminated or flat spring element which acts upon the first and second shear parts to move the shears on to their open position so that the operator of the shears only has to perform the closing and therewith cutting operation. The laminated or flat spring element comprises a first portion fixedly arranged at or allocated to the first shear part and a flexibly arranged second portion acting on the second shear part. In order to arrange for only very low friction with the laminated or flat spring element, the second shear part comprises a rounded surface or curve at a contacting area which constitutes the touching zone between the second shear part and the laminated or flat spring element.

The rounded surface or curve and the laminated or flat spring element may be designed and/or assigned to and/or interact with each other such that during the opening and closing movement of the shears at least partially a rolling motion of the rounded surface or curve of the second shear part on the laminated or flat spring element is executed. There may be provided also a rounded surface or curve at the laminated or flat spring element, in particular due to bending and the individual rounded or curved surfaces of the laminated or flat spring element and of the second shear part may be matched with one another. As is known, rolling friction is much smaller than sliding friction thus abrasion is significantly reduced. With such arrangement axial forces that could act on the laminated or flat spring element are minimised.

Lubricator means are provided for a constant or frequent lubrication of the contacting area. Lubrication of a contacting area of two surfaces, independently whether a sliding or a rolling friction occurs, reduces the friction and supports the avoidance of abrasion decisively. Further, at lubricated surfaces usually no noise is generated during movement of the touching surfaces on or against each other.

In a preferred embodiment, the rounded surface or curve passes into a gap or recess and an end section of the laminated or flat spring element extends into such gap or recess at least when the shears are in an open position, the gap or recess thus providing room for the end section. This embodiment may also provide the rounded surface or curve and the laminated or flat spring element being designed and/or assigned to each other so that during the opening and closing movement of the shears the end section of the laminated or flat spring element pivots in and out from the gap or recess.

The gap or recess may be designed as a pocket which is filled or fillable with grease or any kind of lubricant in order to provide a grease or lubricant reservoir. Preferably, the end section of the laminated or flat spring element is adapted and arranged to dunk in the grease or lubricant reservoir in order to lubricate the surface of the end section. The dunking process may be effected during the opening of the shears.

In a preferred embodiment the pocket is designed such that the grease or lubricant is retained therein merely by means of the low interfacial surface tension between grease or lubricant and inner surface of the pocket. With such physical characteristics the grease or lubricant reservoir will not be discharged, the more so as the pocket, which may have a U-shaped cross section, cannot be closed at its opening in which the end section of the laminated or flat spring element is regularly engaging, and as the operator of the shears uses it in any kind of orientation.

A further specific embodiment is characterized by an allocation of the laminated or flat spring element and the grease or lubricant reservoir in a mutual arrangement such that merely the end section of the laminated or flat spring element dunks in the grease or lubricant reservoir. The grease or lubricant covering the end section is passed on to the contacting area by way of low interfacial surface tension. In addition or alternatively, the inner surface of the pocket and the surface of the laminated or flat spring element directed to the pocket surface may be spaced apart from each other under a small gap and the grease or lubricant may be driven to the contacting area by way of capillary action.

The invention will be described more fully in detail hereinafter with reference to the accompanying drawings, in which
- Fig. 1: is a side view of a secateurs in a closed condition;
- Fig. 2: the secateurs of Fig. 1 in a view from above;
- Fig. 3: the secateurs of Fig. 1 in a sectional view along the line A - A according to Fig. 2;
- Fig. 4: the secateurs of Fig. 1 in a front perspective view with a flat spring in an exploded view;
- Fig. 5: the secateurs of Fig. 1 in a rear perspective view with removed handles; and
- Fig. 6: the secateurs of Fig. 1 in the sectional view of Fig. 3, but in an open position.

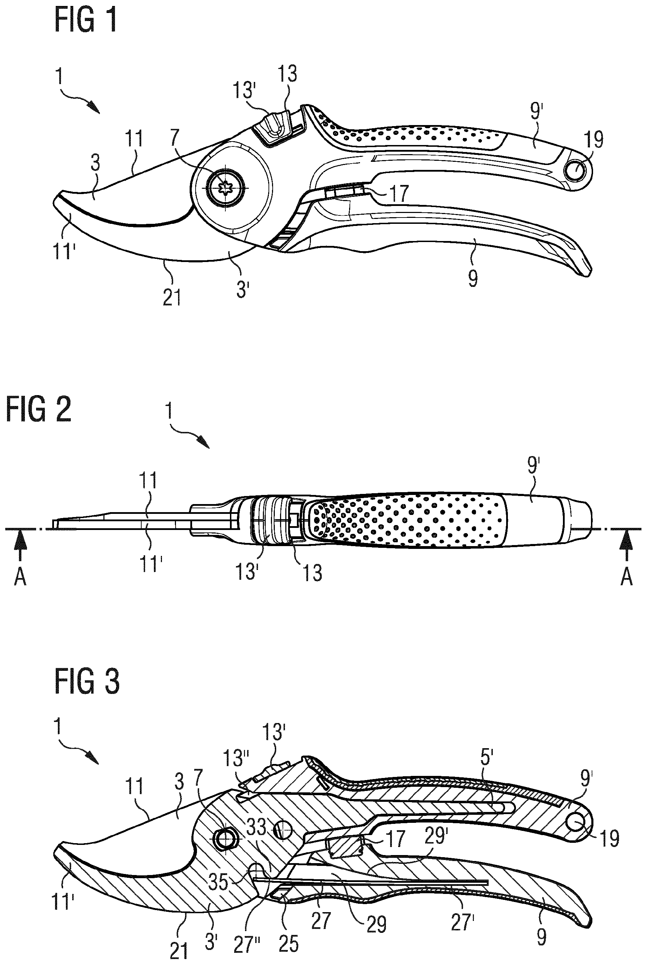

Secateurs 1 as shown in particular in Fig. 1 are composed of a first and a second shear part 3, 3' which are made of metal and are connected to each other by means of a pivot 7 being e. g. a screw and a respective screw nut or the like. Each of the first and second shear parts 3, 3' comprise a lever arm 5, 5', each thereof being assembled with a handle 9, 9' made of plastics or rubber for grasping and operating the secateurs 1, and a cutting blade 11, 11', both lever arms 5, 5' and cutting blades 11, 11' are arranged on opposite sides related to the pivot 7.

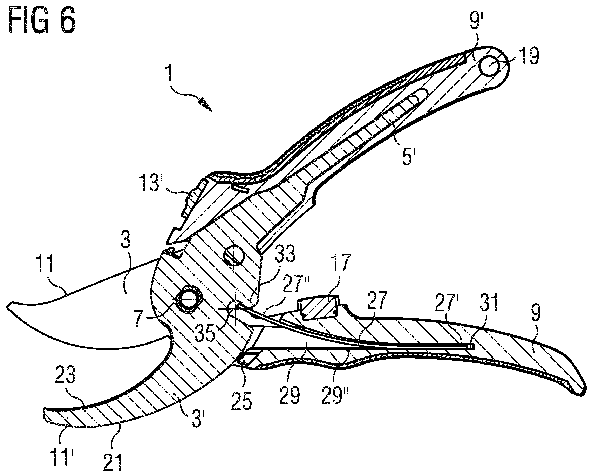

In order to safely retain or convey the secateurs 1, they may be set in an idle or closed position as illustrated with Figs. 1 to 5. In order to secure the idle or closed position, an interlocking slider element 13 is arranged at the handle 9' of the second shear part 3' which is movable in a longitudinal direction of the handle 9'. The interlocking element 13 is composed of a manipulator for shifting 13' and a latch 13", the latter one interacting with a notch 15 arranged at the lever arm 5 of the first shear part 3 when the secateurs 1 are in the idle or closed position. Moving the interlocking element 13 in the opposite longitudinal direction with removing the latch 13" from the notch 15 causes the secateurs 1 to pass on to their open or operational position as illustrated with Fig. 6. As being best illustrated with Fig. 3, when the secateurs 1 are closed again and a cutting operation is executed, a first stopper element 17 pressed into a pocket in the lower handle 9 of the first shear part 3 is provided, with the handle 9' of the second shear part 3' striking against the top side of the stopper elmement 17 thereby defining the stop of the cutting operation. At an end portion of handle 9' of the second shear part 3' an eyelet 19 is provided for allowing a hanging and storing of the secateurs 1, e.g. at a wall hook.

A cutting operation with the secateurs 1 is usually started when the secateurs 1 are in an open position, in particular in a fully open position as illustrated with Fig. 6, by pivoting the first and second shear parts 3, 3' which are connected by the pivot 7. The operator performs a closing movement via the handles 9, 9' onto the cutting blades 11, 11' using the leverage effect for operating a high cutting force. The fully open position is defined by a bottom side 21 of the cutting blade 11' of the second shear part 3' striking against a second stopper element being a protrusion 25 arranged at the handle 9 of the first shear part 3. Said bottom side 21 faces the cutting edge 23 of the cutting blade 11' of the second shear part 3'.

The open position for starting the cutting operation is reached by means of an opening force generated by a spring element which may be a flat spring element 27, as illustrated with Figs. 3 to 6. The flat spring element 27 is arranged at the handle 9 of the first shear part 3 and fixed in radial and/or lateral directions at a first portion 27' of the flat spring element 27 by a respective groove 31 provided at an inner surface of the handle 9. A second portion 27" of the flat spring element 27, adjacent to the first end portion 27', is in a flexible arrangement in order to perform the spring force onto the second shear part 3', thereby passing through a spring excursion which is defined by the range between the open and the closed position. In order the flat spring element 27 to perform the excursion, a respective space or clearance 29 is provided at handle 9.

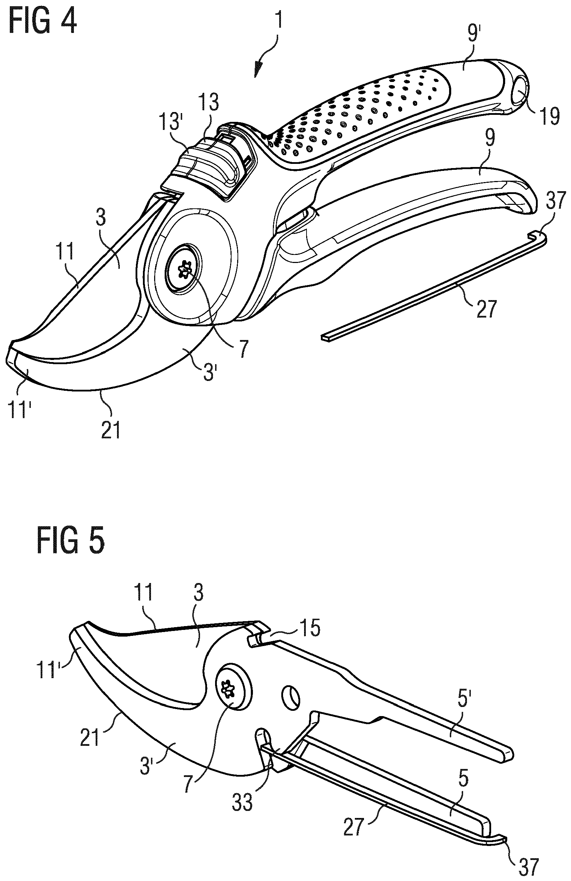

Fig. 6 illustrates the flat spring element 27 in its nearly unstressed state which is obtained in the fully open position of the secateurs 1. In this respect, although the flat spring element 27 is shown with a rectilinear illustration, the exploided view of Fig. 4 reflects the flat spring element 27 in its stressed state, which in particular is taken when secateurs 1 are in their closed position. In the unstressed position, the flat spring element 27 adopts a bent shape having a big and constant radius (see Fig. 6). As can be understood from Fig. 6, the first portion 27' of the flat spring element 27 which is arranged in the groove 31 is shown with a rectilinear arrangement in order to fit into the rectilinear groove 31, however, when disassembled from the groove 31 the first portion 27' of the flat spring element 27 follows the radius of curvature of the second portion 27". When mounted in the groove 31, the straightened first portion 27' thus performs a clamping force onto the groove limitations or walls, thereby supporting a fixing and keeping in position of the flat spring element 27.

The flat spring element 27 is fixed in radial and/or lateral directions by means of the groove 31 and, at the open groove side, by means of the lateral surface of the lever arm 5. The arrangement of groove 31 and lever arm 5 establishes a space for the first portion 27' of the flat spring element 27 without any clearance in order to secure firm positioning with preventing twisting or movement of the flat spring element 27 in radial and/or lateral directions.

The flat spring element 27 is also secured against movement in a first axial direction towards the pivot 7. To this end, an end section of the flat spring element 27 being also an end section of its first portion 27' is bent over a rounded corner, thereby constituting a hook 37 angled under a right angle. The hook 37 abuts a tail of lever arm 5 preventing a movement in the first axial direction.

Finally, the flat spring element 27 is also secured in a second axial direction away from pivot 7 which movement is limited by an end wall of the groove 31 positioned in close proximity to the tail of the lever arm 5, just keeping a space for reception of the hook 37.

The flat spring element 27 is arranged at the secateurs 1 in removable and exchangeable way, so that the operator can substitute it when it is broken. The assembling of the flat spring element 27 is executed as indicated with Figs. 4 to 6. Initially, flat spring element 27 is separated from the secateurs 1 as illustrated with Fig. 4, however, as already described, Fig. 4 shows the flat spring element 27 in straightened state. As indicated with Fig. 5, the flat spring element 27 is then attached to the lever arm 5 of the first shear part 3, with at least its first end portion 27' being oriented parallel to the axis of lever arm 5. After such arrangement, handle 9 is slid on the joining of lever arm 5 and flat spring element 27 ahead with its open end which is positioned ahead the space or clearance 29, i. e. handle 9 is moved from the end portion of lever arm 5 alongside the lever arm 5 until the handle 9 reaches its final position. The hook 37 encompassing the tail of lever arm 5 guarantees that flat spring element 27 is kept in place and not moved with the handle 9 while the latter one is slid on lever arm 5. With such assembly, the flat spring element 27 is also firmly fixed since the flat spring element 27 is guided into the groove 31 at handle 9'.

The lever arm 5' of the second shear part 3' is shaped by providing a fulcrum 33 which is located in close distance to the pivot 7. The second end portion 27" of the flat spring element 27 is constantly pressing against fulcrum 33 so as to perform the spring force onto the second shear part 3' for opening the secateurs 1. Fulcrum 33 is designed by a rounded contact surface for smoothly contacting the second end portion 27" of the flat spring element 27. While the secateurs 1 merely open under an angle of about 40°, the surface of the fulcrum 33 directed to the flat spring element 27 is shaped by a turn of about 65° passing over into a recess establishing a pocket 35 into which the second end portion 27" of the flat spring element 27 extends when the secateurs 1 are in their open position (see Fig. 6).

The pocket 35 is filled with a lubricant (not shown), in particular grease. The construction of the secateurs 1 and their pocket 35 is designed such that the operator of the secateurs 1 is enabled to refill the pocket 35 with lubricant. During the opening movement of the secateurs 1 from their closed position (see Fig. 3) to the open position (see Fig. 6) the end portion of flat spring element 27 arranged opposite to the the end section forming the hook 37 is dunking into the lubricant thereby lubricating the flat spring element 27 at its contacting surface with fulcrum 33. The lubricant may directly flow to the contacting area or it may by driven from the pocket 35 to the contacting area by low interfacial surface tension between lubricant and the surface of the flat spring element 27.

### List of reference numerals

- 1: secateurs
- 3, 3': first and second shear parts
- 5, 5': lever arms
- 7: pivot
- 9, 9': handles
- 11, 11': cutting blades
- 13: interlocking element
- 13': manipulator
- 13": latch
- 15: notch
- 17: hexagon head screw
- 19: eyelet
- 21: bottom side
- 23: cutting edge
- 25: protrusion
- 27: flat spring element
- 27', 27": first and second portions of flat spring element
- 29: clearance
- 29', 29": clearance sides
- 31: groove
- 33: fulcrum
- 35: pocket
- 37: hook

## Claims

1. Shears,
comprising a first shear part (3) and a second shear part (3'), each of the first and second shear parts (3, 3') having a cutting blade (11, 11') and a shaft or lever arm (5, 5') which are arranged at opposite sides of a pivot (7),
the pivot (7) rotatably connecting the first and second shear parts (3, 3') with each other, the shears further comprising a laminated or flat spring element (27) acting upon the first and second shear parts (3, 3') to move the shears on to an open position,
the laminated or flat spring element (27) comprising a first portion (27') fixedly arranged at or allocated to the first shear part (3) and a flexibly arranged second portion (27") acting on the second shear part (3'),
wherein the second shear part (5') comprises a rounded surface or curve at a contacting area constituting the touching zone between the second shear part (5') and the laminated or flat spring element (27),
**characterized in that**
lubricator means are provided for a constant or frequent lubrication of the contacting area.

2. Shears according to claim 1, wherein the rounded surface or curve and the laminated or flat spring element (27) are designed and assigned to each other such that during the opening and closing of the shears at least partially a rolling motion of the rounded surface or curve of the second shear part (3') on the laminated or flat spring element (27) is executed.

3. Shears according to any of claims 1 to 2, wherein the rounded surface or curve passes into a gap or recess, into which gap or recess an end section of the laminated or flat spring element (27) extends at least in an open position of the shears.

4. Shears according to claim 3, wherein the rounded surface or curve and the laminated or flat spring element (27) are designed and assigned to each other such that during the opening and closing of the shears the end section of the laminated or flat spring element (27) pivots in and out from the gap or recess.

5. Shears according to claim 3 or 4, wherein the gap or recess is a pocket (35) filled or fillable with grease or lubricant, thereby establishing a grease or lubricant reservoir.

6. Shears according to claim 5, wherein the end section of the laminated or flat spring element (27) is adapted to dunk in the grease or lubricant reservoir.

7. Shears according to claim 6, wherein the dunking process is effected during the opening of the shears.

8. Shears according to any of claims 5 to 7, wherein the pocket (35) is designed such that the grease or the lubricant is retained therein merely by means of the low interfacial surface tension between grease or lubricant and inner surface of the pocket (35).

9. Shears according to any of claims 5 to 8, wherein the laminated or flat spring element (27) and the grease or lubricant reservoir are allocated in a mutual arrangement such that merely the end section of the laminated or flat spring element (27) is adapted to dunk in the grease or lubricant reservoir and the grease or lubricant covering the end section is passed on to the contacting area by way of low interfacial surface tension.

10. Shears according to any of claims 5 to 9, wherein the inner surface of the gap or recess and the surface of the laminated or flat spring element (27) directed to the surface of the gap or recess may be spaced apart from each other under a small gap, in particular at least when the shears are in their open position and the grease or lubricant is passed on to the contacting area by way of capillary action or effect.

## Patentansprüche

1. Schere,
umfassend einen ersten Scherteil (3) und einen zweiten Scherteil (3'), wobei jeder der ersten und zweiten Scherteile (3, 3') ein Schneidmesser (11, 11') und einen Schaft oder Hebelarm (5, 5') aufweist, die an gegenüberliegenden Seiten eines Drehpunktes (7) angeordnet sind,
wobei der Drehpunkt (7) die ersten und zweiten Scherteile (3, 3') drehbar miteinander verbindet, wobei die Schere ferner ein laminiertes oder flaches Federelement (27) umfasst, das auf die ersten und zweiten Scherteile (3, 3') wirkt, um die Schere in eine offene Position zu bewegen,
wobei das laminierte oder flache Federelement (27) einen ersten Abschnitt (27'), der fest am ersten Scherteil (3) angeordnet oder diesem zugeordnet ist, und einen flexibel angeordneten zweiten Abschnitt (27") umfasst, der auf das zweite Scherteil (3') wirkt,
wobei das zweite Scherteil (5') eine abgerundete Oberfläche oder Kurve an einem Kontaktbereich umfasst, der die Berührungszone zwischen dem zweiten Scherteil (5') und dem laminierten oder flachen Federelement (27) bildet,
**dadurch gekennzeichnet, dass**
Schmiermittel für eine konstante oder regelmäßige Schmierung der Kontaktfläche vorgesehen sind.

2. Schere nach Anspruch 1, wobei die abgerundete Oberfläche oder Kurve und das laminierte oder flache Federelement (27) so ausgelegt und einander zugeordnet sind, dass beim Öffnen und Schließen der Schere zumindest teilweise eine Rollbewegung der abgerundeten Oberfläche oder Kurve des zweiten Scherteils (3') am laminierten oder flachen Federelement (27) ausgeführt wird.

3. Schere nach einem der Ansprüche 1 bis 2, wobei die abgerundete Oberfläche oder Kurve in einen Spalt oder eine Aussparung übergeht, in den/die sich ein Endabschnitt des laminierten oder flachen Federelements (27) zumindest in einer offenen Position der Schere erstreckt.

4. Schere nach Anspruch 3, wobei die abgerundete Oberfläche oder Kurve und das laminierte oder flache Federelement (27) so ausgelegt und einander zugeordnet sind, dass der Endabschnitt des laminierten oder flachen Federelements (27) beim Öffnen und Schließen der Schere in und aus dem Spalt oder der Aussparung dreht.

5. Schere nach Anspruch 3 oder 4, wobei der Spalt oder die Aussparung eine mit Schmierfett oder Schmiermittel gefüllte oder befüllbare Tasche (35) ist, wodurch ein Schmierfett- oder Schmiermittelbehälter gebildet wird.

6. Schere nach Anspruch 5, wobei der Endabschnitt des laminierten oder flachen Federelements (27) zum Eintauchen in den Schmierfett- oder Schmiermittelbehälter ausgebildet ist.

7. Schere nach Anspruch 6, wobei der Eintauchvorgang während des Öffnens der Schere ausgeführt wird.

8. Schere nach einem der Ansprüche 5 bis 7, wobei die Tasche (35) so ausgebildet ist, dass das Schmierfett oder das Schmiermittel lediglich durch die geringe Grenzflächenoberflächenspannung zwischen Schmierfett oder Schmiermittel und der inneren Oberfläche der Tasche (35) in ihr zurückgehalten wird.

9. Schere nach einem der Ansprüche 5 bis 8, wobei das laminierte oder flache Federelement (27) und der Schmierfett- oder Schmiermittelbehälter in einer gegenseitigen Anordnung so angeordnet sind, dass lediglich der Endabschnitt des laminierten oder flachen Federelements (27) zum Eintauchen in den Schmierfett- oder Schmiermittelbehälter ausgebildet ist und das den Endabschnitt bedeckende Schmierfett oder Schmiermittel durch eine geringe Grenzflächenoberflächenspannung auf die Kontaktfläche übertragen wird.

10. Schere nach einem der Ansprüche 5 bis 9, wobei die innere Oberfläche des Spaltes oder der Aussparung und die Oberfläche des laminierten oder flachen Federelements (27), das auf die Oberfläche des Spaltes oder der Aussparung gerichtet ist, unter einem kleinen Spalt voneinander beabstandet sein können, insbesondere wenn sich die Schere zumindest in ihrer geöffneten Position befindet und das Schmierfett oder das Schmiermittel durch Kapillarwirkung oder -effekt auf die Kontaktfläche übertragen wird.

## Revendications

1. Cisailles,
comprenant une première partie de cisaillement (3) et une deuxième partie de cisaillement (3'), chacune des première et deuxième parties de cisaillement (3, 3') comportant une lame de coupe (11, 11') et un arbre ou bras de levier (5, 5') qui sont disposés sur des côtés opposés d'un pivot (7),
le pivot (7) reliant de manière rotative les première et deuxième parties de cisaillement (3, 3') l'une à l'autre, les cisailles comprenant en outre un élément à ressort laminé ou plat (27) agissant sur les première et deuxième parties de cisaillement (3, 3') pour déplacer les cisailles dans une position ouverte,
l'élément à ressort laminé ou plat (27) comprenant une première partie (27') disposée de manière fixe sur la première partie de cisaillement (3) ou affectée à celle-ci et une seconde partie (27") disposée de manière flexible agissant sur la deuxième partie de cisaillement (3'),
dans lesquelles la deuxième partie de cisaillement (5') comprend une surface arrondie ou une courbe au niveau d'une zone de contact constituant la zone de contact entre la deuxième partie de cisaillement (5') et l'élément à ressort laminé ou plat (27),
**caractérisé en ce que**
des moyens de lubrification sont prévus pour une lubrification constante ou fréquente de la zone de contact.

2. Cisailles selon la revendication 1, dans lesquelles la surface arrondie ou la courbe et l'élément à ressort laminé ou plat (27) sont conçus et affectés l'un à l'autre de telle sorte que pendant l'ouverture et la fermeture des cisailles, au moins partiellement un mouvement de roulement de la surface arrondie ou de la courbe de la deuxième partie de cisaillement (3') sur l'élément à ressort laminé ou plat (27) est exécuté.

3. Cisailles selon l'une quelconque des revendications 1 à 2, dans lesquelles la surface arrondie ou la courbe passe dans une fente ou un évidement, dans lequel une section d'extrémité de l'élément à ressort laminé ou plat (27) s'étend au moins dans une position ouverte des cisailles.

4. Cisailles selon la revendication 3, dans lesquelles la surface arrondie ou la courbe et l'élément à ressort laminé ou plat (27) sont conçus et affectés l'un à l'autre de telle sorte que pendant l'ouverture et la fermeture des cisailles, la section d'extrémité de l'élément à ressort laminé ou plat (27) pivote dans et hors de la fente ou évidement.

5. Cisailles selon la revendication 3 ou 4, dans lesquelles la fente ou évidement est une poche (35) remplie ou pouvant être remplie de graisse ou de lubrifiant, constituant ainsi un réservoir de graisse ou de lubrifiant graisse ou lubrifiant.

6. Cisailles selon la revendication 5, dans lesquelles la section d'extrémité de l'élément à ressort laminé ou plat (27) est adaptée pour plonger dans le réservoir de graisse ou de lubrifiant.

7. Cisailles selon la revendication 6, le processus de trempage est effectué pendant l'ouverture des cisailles.

8. Cisailles selon l'une quelconque des revendications 5 à 7, dans lesquelles la poche (35) est conçue de telle sorte que la graisse ou le lubrifiant y soit retenu simplement par la faible tension superficielle interfaciale entre la graisse ou le lubrifiant et la surface intérieure de la poche (35).

9. Cisailles selon l'une quelconque des revendications 5 à 8, dans lesquelles l'élément à ressort laminé ou plat (27) et le réservoir de graisse ou lubrifiant sont disposés en un agencement mutuel de telle sorte que seule la section d'extrémité de l'élément à ressort laminé ou plat (27) est adaptée pour plonger dans le réservoir de graisse ou lubrifiant et la graisse ou lubrifiant recouvrant la section d'extrémité est transmis à la surface de contact via une faible tension superficielle interfaciale.

10. Cisailles selon l'une quelconque des revendications 5 à 9, dans lesquelles la surface intérieure de la fente ou de l'évidement et la surface de l'élément à ressort laminé ou plat (27) dirigée vers la surface de la fente ou de l'évidement peuvent être espacées les unes des autres sous un petit espace, en particulier au moins lorsque les cisailles sont en position ouverte et la graisse ou le lubrifiant est transmis à la surface en contact par action ou effet capillaire.
